# EUROPEAN PATENT SPECIFICATION

(11) **EP 0 665 632 B1**
(45) Date of publication and mention of the grant of the patent: **28.05.2003**
(21) Application number: 95100975.2
(22) Date of filing: 25.01.1995
(51) Int. Cl.: H02M 3/335

(54) **Switching power source apparatus**
Schalt-Stromversorgungsgerät
Dispositif d'alimentation de puissance à découpage

(30) Priority: 28.01.1994 JP 800994; 07.02.1994 JP 1303994; 07.02.1994 JP 1304094
(43) Date of publication of application: 02.08.1995
(60) Divisional application: 97110563.0
(73) Proprietor: MATSUSHITA ELECTRIC INDUSTRIAL CO., LTD., Kadoma-shi, Osaka 571 (JP); SHINDENGEN ELECTRIC MANUFACTURING COMPANY, LIMITED, Hanno-shi, Saitama-ken 357 (JP)
(72) Inventor: Ishii, Takuya, Suita-shi, Osaka 564 (JP); Watanabe, Haruo, Hidaka-shi, Saitama 350-12 (JP); Kobayashi, Yoshinori, Hanno-shi, Saitama 357 (JP); Sekine, Yutaka, Saitama 358 (JP)
(74) Representative: Grünecker, Kinkeldey, Stockmair & Schwanhäusser Anwaltssozietät

(56) References cited:
- WO-A-92/02983
- DE-A- 4 131 240
- GB-A- 2 261 331
- PATENT ABSTRACTS OF JAPAN vol. 6 no. 32 (E-96) [910] ,26 February 1982 & JP-A-56 150972 (HITACHI) 22 November 1981,

## Description

### Background of the invention

### 1. Industrial field of utilization

The present invention relates to a switching power source apparatus which receives alternating current such as commercial alternating current power source as input.

### 2. Related art of the invention

From JP-A-56-150 972 a switching power source apparatus is known in which the power factor is improved by sinusoidally flowing supply current wherein a means shortening distance between power lines through an inductor within a period of time when the current is not flowed in a rectifying diode is provided. The supply current which is a rectified current is smoothened by an inductor and a capacitor and is detected by a detection resistor, and the power source is shortened through the inductor by turning a transistor on when the value obtained from the resistor is less than the value of the sign wave in a comparison voltage generating circuit. When the supply current reaches a set value, the transistor is turned off to cause the current to start to be attenuated, and the transistor is turned on again when a comparator circuit with hysteresis acts to cause the current to reach some lower value than a set value.

By the arrangement, the higher harmonic component is largely reduced to enable the power factor to be improved.

From DE-A-4131240, a power supply is known in which an input alternating current is rectified and smoothened. The circuit comprises a rectifier, an input inductor temporarily storing the energy of the input current, a condensor in which the energy from the inductor is charged, an output transformer receiving the energy from the condensor and supplying energy to a load, and a switching arrangement for controlling the input inductor and the output transformer and a control means for controlling the switching means so that the direct current fed to the load is maintained at a constant voltage.

The switching power source apparatus is widely used recently as a power source circuit for various electronic appliances owing to its efficient power transforming characteristic. In most of such circuits, however, since the input rectifying circuit of capacitor input type is used, the power factor is poor, and harmonic currents contained in the input current may cause troubles in other electronic appliances.

A conventional switching power source apparatus is described below.

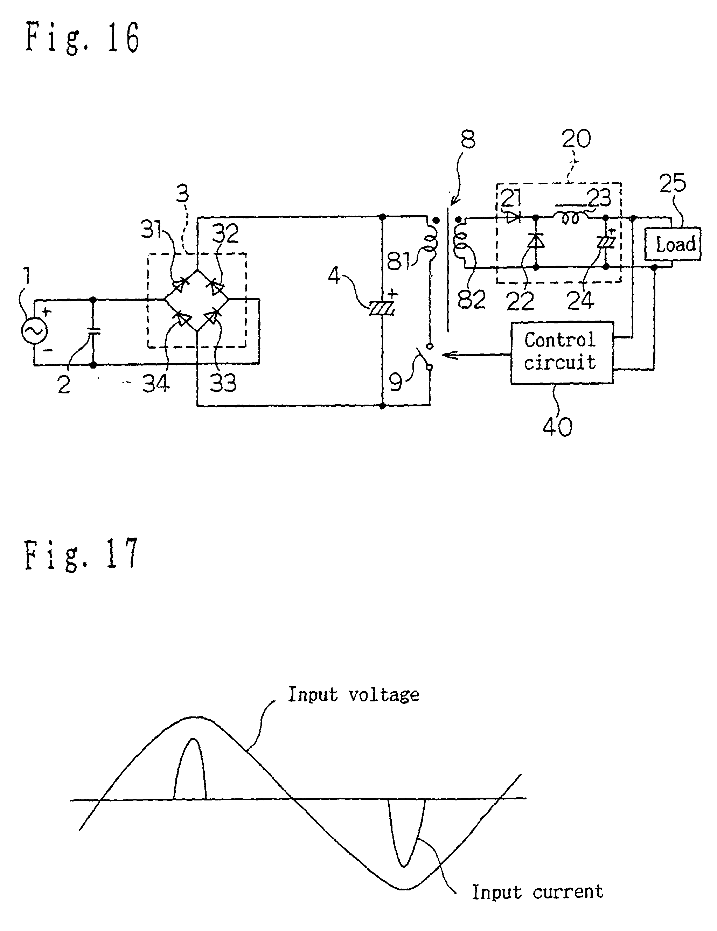

Fig. 16 shows a circuit construction of a conventional switching power source apparatus. In Fig. 16, reference numeral 1 denotes an input alternating-current power source, and 2 is an input filter capacitor, which is connected to both ends of the input alternating-current power source 1. Reference numeral 3 denotes a full-wave rectifying circuit, which is composed of diodes 31 to 34. Reference numeral 4 is a smoothing capacitor, and an input rectifying circuit of capacitor input type which rectifies and smoothes the alternating-current input voltage of the input alternating-current power source 1 is constituted with the full-wave rectifying circuit 3 and smoothing capacitor 4. Reference numeral 8 represents a transformer, which possesses a primary winding 81 and a secondary winding 82. Reference numeral 9 is a switch element, and a series circuit of the primary winding 81 and switch element 9 is connected to both ends of the smoothing capacitor 4. Reference numeral 20 is a rectifying and smoothing circuit, composed of diodes 21, 22, a choke coil 23, and a capacitor 24, which rectifies and smoothes the voltage generated in the secondary winding 82 by on/off action of the switch element 9, and supplies an output direct-current voltage to a load 25. Reference numeral 40 is a control circuit, which controls the on/off ratio of the switch element 9 so as to stabilize the output direct-current voltage supplied to the load 25.

In thus constituted switching power source apparatus, an input waveform is shown in Fig. 17. For a sinusoidal alternating-current input voltage, the full-wave rectifying circuit 3 conducts at only near its peak value, and the charging current to the smoothing capacitor 4 is concentrated, so that the input current waveform has a peak form short in the conduction period.

In such conventional constitution, however, the power factor is poor, and its input current contains lots of harmonic currents, which may cause troubles to other electronic appliances.

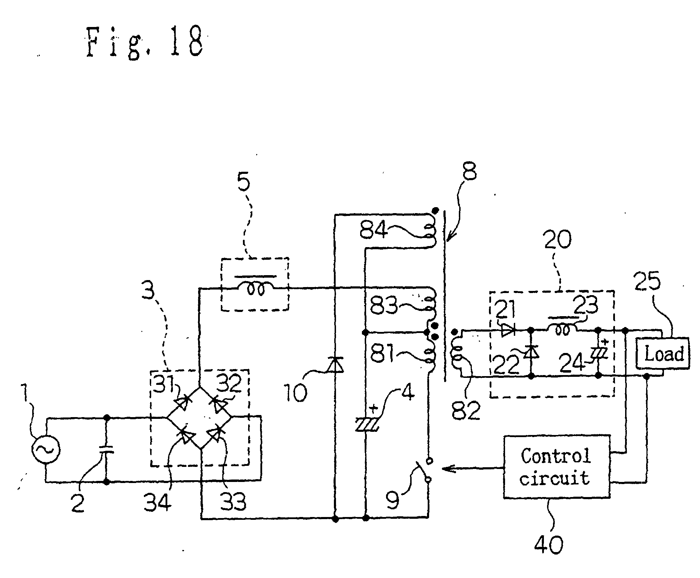

The present inventors, prior to the invention, devised a switching power source apparatus as shown in Fig. 18. Herein, the parts having the same actions as in Fig. 16 are identified with same reference numerals. In Fig. 18, reference numeral 1 is an input alternating-current power source, and 2 is an input filter capacitor, which is connected to both ends of the input alternating-current power source 1. Reference numeral 3 denotes a full-wave rectifying circuit, composed of diodes 31 to 34. Reference numeral 4 is a smoothing capacitor, and 5 is a choke coil, and one end of the choke coil 5 is connected to the positive electrode output end of the full-wave rectifying circuit 3. Reference numeral 8 represents a transformer, which comprises a primary winding 81, a secondary winding 82, a tertiary winding 83 connected to the other end of the choke coil 5, and a quaternary winding 84. A reference numeral 9 is a switch element, and a series circuit of the primary winding 81 and the switch element 9 is connected to both ends of the smoothing capacitor 4. Reference numeral 19 is a diode, and its series circuit with the quaternary winding 84 is connected to both ends of the smoothing capacitor 4. Reference numeral 20 is a rectifying and smoothing circuit, composed of diodes 21, 22, a choke coil 23, and a capacitor 24, which rectifies and smoothes the voltage generated in the secondary winding 82 by on/off action of the switch element 9, and supplies an output direct-current voltage to a load 25. Reference numeral 40 denotes a control circuit, which controls the on/off ratio of the switch element 9 so as to stabilize the output direct-current voltage supplied to the load 25. Supposing the voltage of the input alternating-current power source 1 to be Vi, the voltage of the smoothing capacitor to be Ec, the number of turns of the primary winding 81 to be N1, the number of turns of the tertiary winding 83 to be N3, their ratio of number of turns to be N = N3/N1, the number of turns of the quaternary winding 84 to be N4, and N4=N1, the operation is described below.

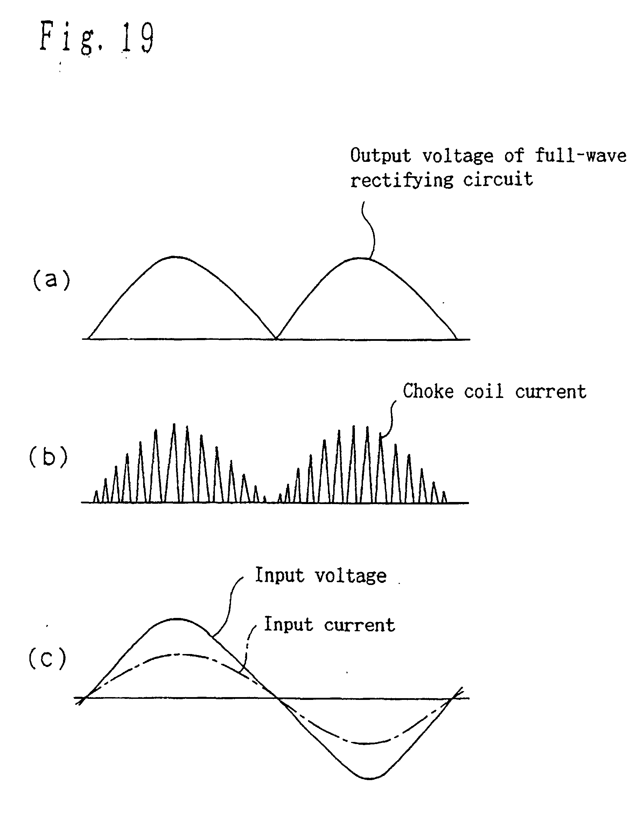

First, while the input alternating-current power source 1 is in the period of the polarity as shown in Fig. 19, when the switch element 9 is turned on, a voltage of N-Ec is generated in the tertiary winding 83. When the voltage Vi of the input alternating-current power source 1 is greater than (1-N)Ec, the diodes 31 and 33 conduct, and the current flows in the route of input alternating-current power source 1 → diode 31 → choke coil 5 → tertiary winding 83 → primary winding 81 → switch element 9 → diode 33 → input alternating-current power source 1, or input alternating-current power source 1 → diode 31 → choke coil 5 → tertiary winding 83 → smoothing capacitor 4 → diode 33 → input alternating-current power source 1. In the choke coil 5, Vi-(1-N)Ec is applied, and this current increases linearly at an inclination proportional to Vi-(1-N)Ec.

When the switch element 9 is turned off, the current flows in the route of input alternating-current power source 1 → diode 31 → choke coil 5 → tertiary winding 83 → smoothing capacitor 4 → diode 33 → input alternating-current power source 1. In the choke coil 5, Vi-(1+N)Ec is applied, and this current decreases linearly and soon becomes zero.

When the polarity of the input alternating-current power source 1 is inverted from the state in Fig. 31, the diode 32 acts instead of the diode 31, and the diode 34, instead of the diode 33.

In the above operation, when N=1, the operation waveforms of the parts are shown in Fig. 19. In Fig. 19, (a) denotes an output voltage waveform of the full-wave rectifying circuit 3, (b) is a current waveform flowing in the choke coil 5, and (c) is an input current waveform. The current flowing in the choke coil 5 is a sawtooth waveform having a peak value proportional to the voltage of the input alternating-current power source 1. It is smoothed by the filter capacitor 2 to produce an input current waveform, which is a sinusoidal waveform approximately proportional to the input alternating-current voltage. Incidentally, in the case of N < 1, the full-wave rectifying circuit 3 does not conduct when Vi-(1-N)Ec < 0, and the input current waveform becomes as shown by broken line in the diagram.

However, not only the current flowing in the choke coil 5 flows through the tertiary winding 83, but also its induction current flows also into the primary winding 81 when the switch element 9 is ON, or into the quaternary winding 84 when the switch element 9 is OFF, and hence the conduction loss is large, and the efficiency as switching power source equipment is poor.

To solve the problems, it is hence a primary object of the invention to present a switching power source apparatus of excellent power factor, input characteristic of few input current harmonic currents, and high efficiency.

### SUMMARY OF THE INVENTION

To achieve the object, the switching power source apparatus in claim 1 of the invention comprises a full-wave rectifying circuit for rectifying an input alternating-current power source, a transformer possessing a primary winding having one end connected to a positive electrode output terminal of the full-wave rectifying circuit, and a secondary winding, a switch element connected to the other end of the primary winding, a smoothing capacitor connected parallel to a series circuit of the primary winding and switch element, first and second diodes having anode terminals connected to a pair of input terminals of the full-wave rectifying circuit, and cathode terminals connected to the connection point of the primary winding and switch element, a choke coil connected between the connection point of the switch element and the smoothing capacitor, and the negative electrode output terminal of the full-wave rectifying circuit, a rectifying and smoothing circuit for rectifying and smoothing the output of the secondary winding, and supplying a direct-current output voltage to a load, and a control circuit for controlling the on/off ratio of the switch element so that the direct-current output voltage may be stabilized.

In this constitution, the route of the current flowing in the choke coil is, when the switch element is ON, the input alternating-current power source → first or second diode → switch element → choke coil → full-wave rectifying circuit → input alternating-current power source, and when the switch element is OFF, input alternating-current power source → full-wave rectifying circuit → smoothing capacitor → choke coil → full-wave rectifying circuit → input alternating-current power source, and hence the transformer winding does not intervene in the way, and the conduction loss is decreased.

### Brief Description of the Drawings

Fig. 1 is a circuit constitutional diagram of a switching power source apparatus in the first embodiment of the invention.
Fig. 2 is an input waveform diagram of the switching power source apparatus in the first embodiment.
Fig. 3 is a circuit constitutional diagram of a switching power source apparatus in the second embodiment of the invention.
Fig. 4 is an input waveform diagram of the switching power source apparatus in the second embodiment.
Fig. 5 is a circuit constitutional diagram of a switching power source apparatus in the third embodiment of the invention.
Fig. 6 is an input waveform diagram of the switching power source apparatus in the third embodiment.
Fig. 7 is a circuit constitutional diagram of a switching power source apparatus in the fourth embodiment of the invention.
Fig. 8 is a circuit constitutional diagram of a switching power source apparatus in the fifth embodiment of the invention.
Fig. 9 is an essential structural diagram in the fifth embodiment.
Fig. 10 is a circuit constitutional diagram of a switching power source apparatus in the sixth embodiment of the invention.
Fig. 11 is an essential characteristic diagram in the sixth embodiment.
Fig. 12 is an essential circuit diagram in the sixth embodiment.
Fig. 13 is a circuit constitutional diagram of a switching power source apparatus in the seventh embodiment of the invention.
Fig. 14 is a characteristic diagram of choke coil in the seventh embodiment.
Fig. 15 is an essential characteristic diagram in the seventh embodiment.
Fig. 16 is a circuit constitutional diagram of a conventional switching power source apparatus.
Fig. 17 is an essential characteristic diagram of the prior art.
Fig. 18 is a circuit constitutional diagram of a switching power source apparatus for explaining the problems to be solved by the invention.
Fig. 19 is an essential characteristic diagram of Fig. 18.

### PREFERRED EMBODIMENTS

### (Embodiment 1)

An embodiment of the invention is described below while referring to the drawings.

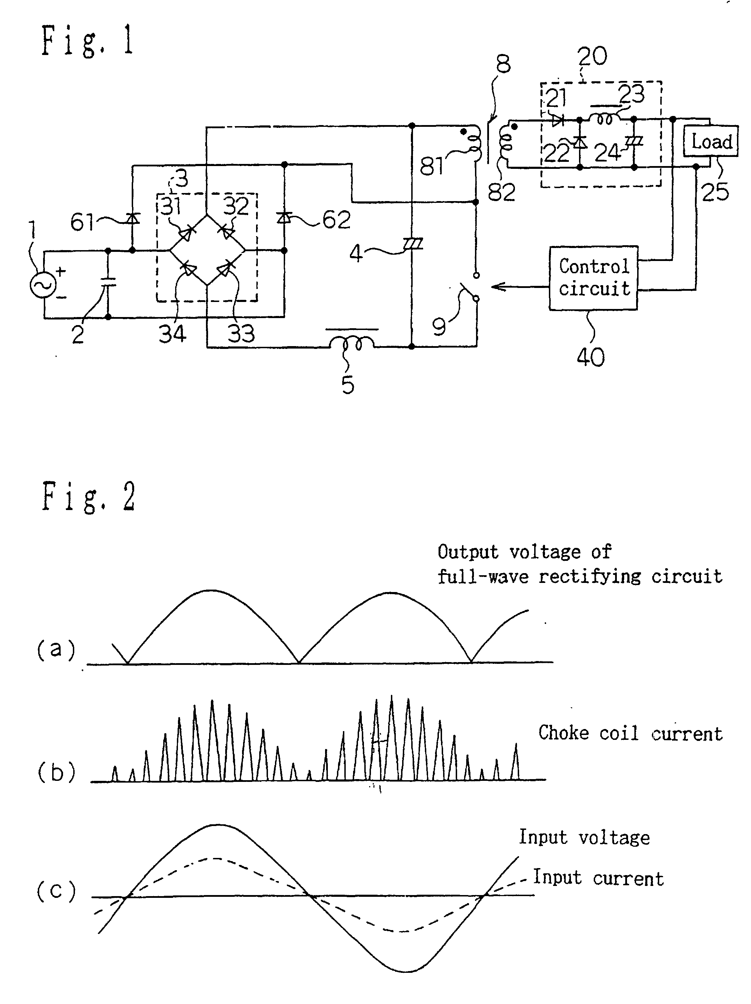

In Fig. 1, reference numeral 1 denotes an input alternating-current power source, and 2 is a filter capacitor, which is connected to both ends of the input alternating-current power source. Reference numeral 3 is a full-wave rectifying circuit, composed of diodes 31 to 34, which rectifies the input alternating-current voltage of the input alternating-current power source 1. Reference numeral 4 is a smoothing capacitor, and 5 is a choke coil, and a series circuit of the smoothing capacitor 4 and choke coil 5 is connected to the output end of the full-wave rectifying circuit 3. Reference numeral 61 is a first diode, 62 is a second diode, and the anode terminals of the first diode 61 and second diode 62 are connected to the input alternating-current power source 1, and the cathode terminals are connected with each other. Reference numeral 8 represents a transformer, which possesses a primary winding 81 and a secondary winding 82. Reference numeral 9 denotes a switch element, and a series circuit of the primary winding 81 and switch element 9 is connected to both ends of the smoothing capacitor 4. The connection point of the primary winding 81 and switch element 9, and the cathode terminals of the first diode 61 and second diode 62 are connected with each other. Reference numeral 20 is a rectifying and smoothing circuit, which is composed of diodes 21, 22, a choke coil 23, and a capacitor 24. The rectifying and smoothing circuit 20 is connected to the secondary winding 82, and rectifies and smoothes the voltage generated in the secondary winding 82 by on/off action of the switch element 9. Reference numeral 25 represents a load, which is connected to the output end of the rectifying and smoothing circuit 20, and a direct-current output voltage is supplied. Reference numeral 40 is a control circuit, which controls the on/off ratio of the switch element 9 so as to stabilize the direct-current output voltage supplied to the load 25. Herein, the portion composed of the smoothing capacitor 4, transformer 8, switch element 9, rectifying and smoothing circuit 20, load 25 and control circuit 40 operates same as an ordinary DC/DC converter, and hence the explanation is omitted.

While the polarity of the input alternating-current power source 1 is in the period in Fig. 1, when the switch element 9 is turned on, the diodes 61 and 33 conduct, and the current flows in the route of input alternating-current power source 1 → diode 61 → switch element 9 → choke coil 5 → diode 33 → input alternating-current power source 1. In the choke coil 5, the voltage of the input alternating-current power source 1 is applied, and this current increases linearly at an inclination proportional to the voltage of the input alternating-current power source 1.

When the switch terminal 9 is turned off, instead of the diode 61, the diode 31 conducts, and the current flows in the route of input alternating-current power source 1 → diode 31 → smoothing capacitor 4 → choke coil 5 → diode 33 → input alternating-current power source 1. In the choke coil 5, the difference of the voltages between the input alternating-current power source 1 and smoothing capacitor 4 is applied, and this current decreases linearly, and soon becomes zero.

When the polarity of the input alternating-current power source 1 is inverted from the state in Fig. 1, the diode 62 acts instead of the diode 61, the diode 32, instead of the diode 31, and the diode 34, instead of the diode 33, respectively.

The operation waveforms of the parts by such repetition of action are shown in Fig. 2. In Fig. 2, (a) denotes an output voltage waveform of the full-wave rectifying circuit 3, (b) is a current waveform flowing in the choke coil 5, and (c) is an input current waveform. The current flowing in the choke coil 5 is a sawtooth waveform possessing a peak value proportional to the voltage of the input alternating-current power source 1. It is smoothed by the filter capacitor 2, and the obtained input current waveform is a sinusoidal waveform nearly proportional to the input alternating-current voltage.

Thus, in the first embodiment, same as in the switching power source apparatus shown in Fig. 31, the input current waveform is improved, and hence enhancement of power factor and reduction of harmonic current currents are realized. Moreover, since the current of the choke coil 5 flows without passing through the tertiary winding 83 of the transformer 8 shown in Fig. 31, the conduction loss can be decreased.

### (Embodiment 2)

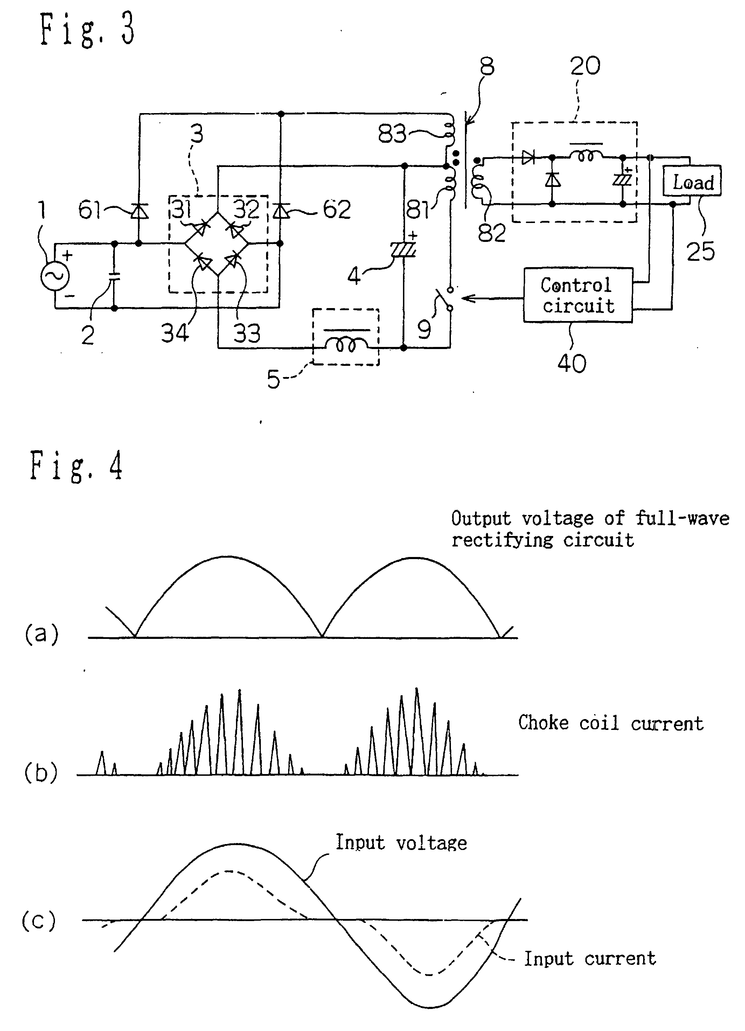

A second embodiment of the invention is described below. Fig. 3 is a circuit configuration diagram showing the second embodiment of the invention. In Fig. 3, reference numeral 1 is an input alternating-current power source, 2 is a filter capacitor, 3 is a full-wave rectifying circuit, 5 is a smoothing capacitor, 5 is a choke coil, 9 is a switch element, 20 is a rectifying and smoothing circuit, 25 is a load, and 40 is a control circuit. These are same in the constitution in Fig. 1. What differs from the constitution in Fig. 1 is that a tertiary winding 83 having one end connected to the transformer 8 at one end of the primary winding 81 is provided, and that the cathode terminals of the first diode 61 and second diode 62 are connected to the other end of the tertiary winding 83. The voltage of the smoothing capacitor 5 is supposed to be Ec, the number of turns of the primary winding 81 to be N1, and the number of turns of the tertiary winding 83 to be N3, assuming N = N3/N1.

In thus constituted switching power source apparatus, the operation is described below. First, while the polarity of the input alternating-current power source 1 is in the period shown in Fig. 3, when the switch element 9 is turned on, a voltage of N-Ec is generated in the tertiary winding 83. When the voltage Vi of the input alternating-current power source 1 is greater than (1-N)Ec, the diodes 61 and 33 conduct, and the current flows in the route of input alternating-current power source 1 → diode 61 → tertiary winding 83 → primary winding 81 → switch element 9 → choke coil 5 → diode 33 → input alternating-current power source 1, or input alternating-current power source 1 → diode 61 → tertiary winding 83 → smoothing capacitor → choke coil 5 → diode 33 → input alternating-current power source 1. In the choke coil 5, Vi-(1-N)Ec is applied, and this current increases linearly at an inclination proportional to Vi-(1-N)Ec.

When the switch element 9 is turned off, the diode 31 conducts instead of the diode 61, and the current flows in the route of input alternating-current power source 1 → diode 31 → smoothing capacitor 4 → choke coil 5 → diode 33 → input alternating-current power source 1. In the choke coil 5, V-Ec is applied, and this current decreases linearly and soon becomes zero.

When the polarity of the input alternating-current power source 1 is inverted from the state in Fig. 3, same as in the first embodiment, the diode 62 acts instead of the diode 61, the diode 32, instead of the diode 31, and the diode 34, instead of the diode 33.

In this operation, when N=1, the operation in the second embodiment is equivalent to the operation in the first embodiment. When N<1, the operation waveforms of parts are shown in Fig. 4. In Fig. 4, (a) denotes an output voltage waveform of the full-wave rectifying circuit 3, (b) is a current waveform flowing in the choke coil 5, and (c) is an input current waveform. When Vi-(1-N)Ec < 0, the diode 61 does not conduct, and an input current non-conduction period occurs, and the power factor is slightly lower than in the first embodiment. However, the voltage generated in the tertiary winding 83 is smaller than in the first embodiment, and the applied voltage to the diode 61 when the switch element 9 is OFF is decreased.

In this way, in the second embodiment, same as in the switching power source apparatus shown in Fig. 18, the input current waveform is improved, and enhancement of power factor and decrease of harmonic current currents are realized. Furthermore, since the current of the choke coil 5 flows without passing through the tertiary winding 83 when the switch element 9 is OFF, the conduction loss is smaller than in the switching power source apparatus shown in Fig. 32. Besides, by defining N<1, the withstand voltage of the diode 61 can be reduced as compared with the case of the first embodiment.

### (Embodiment 3)

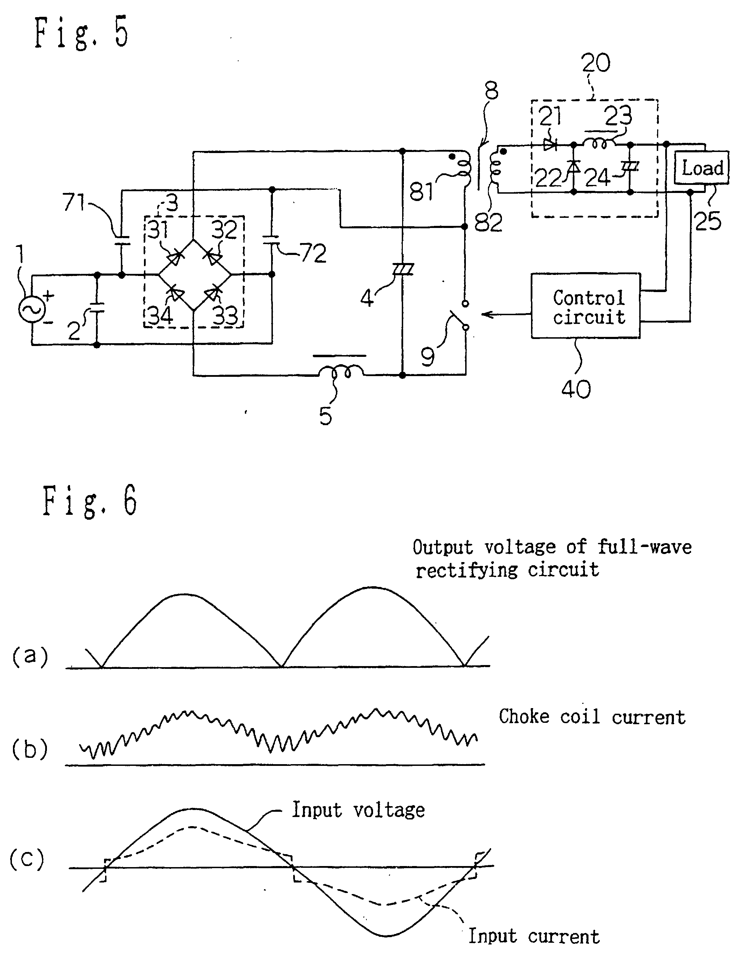

A third embodiment of the invention is described below. Fig. 5 is a circuit constitutional diagram showing the third embodiment of the invention. In Fig. 5, what differs from the constitution in Fig. 1 is that the first and second diodes 61,62 are respectively replaced by first and second capacitors 71, 72.

In thus constituted switching power source apparatus, the operation is described below. First, while the polarity of the input alternating-current power source 1 is in the period in Fig. 5, when the switch element 9 is turned on, the current flows and increases in the route of input alternating-current power source 1 → capacitor 71 → switch element 9 → choke coil 5 → diode 33 → input alternating-current power source 1. When charging of the capacitor 71 is promoted, and the potential at the connection point of the capacitor 71 and input alternating-current power source 1 climbs up, being about to exceed the potential of the smoothing capacitor 4, the diode 31 conducts, and the current flows in the route of the input alternating-current power source 1 → diode 31 → smoothing capacitor 4 → choke coil 5 → diode 33 → input alternating-current power source 1.

When the switch element 9 is turned off, the current flows in the route of input alternating-current power source 1 → diode 31 → smoothing capacitor 4 → choke coil 5 → diode 33 → input alternating-current power source 1, and at the same time the excitation current of the transformer 8 flows in the route of primary winding 81 → capacitor 71 → diode 31 → primary winding 81, and the electric charge accumulated in the capacitor 71 is discharged.

When the polarity of the input alternating-current power source 1 is inverted from the state in Fig. 5, the diode 62 operates instead of the diode 61, the diode 32, instead of the diode 31, and the diode 34, instead of the diode 33.

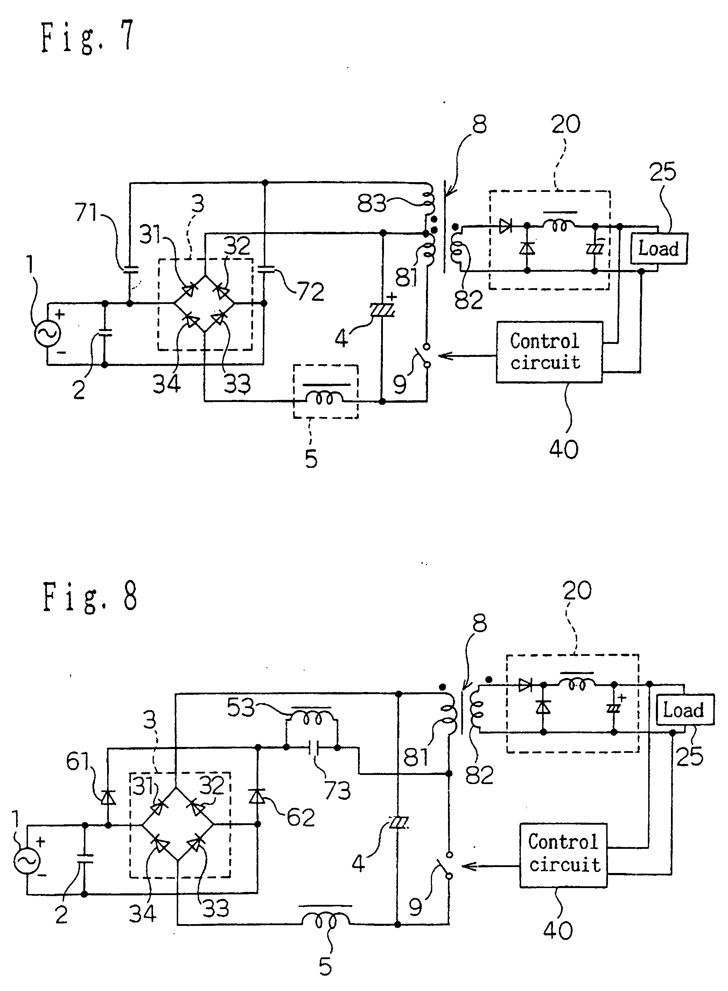

Operation waveforms of parts by repetition of such operation are shown in Fig. 6. In Fig. 6, (a) denotes a output voltage waveform of the full-wave rectifying circuit 3, (b) is a current waveform flowing in the choke coil 5, and (c) is an input current waveform. The current flowing in the choke coil 5 is a continuous current following the voltage of the input alternating-current power source 1. The input current waveform is obtained by smoothing it by the filter capacitor 2.

Thus, in the third embodiment, improving the input current waveform, enhancement of power factor and reduction of harmonic currents are realized. Furthermore, since the current of the choke coil 5 flows without passing through the transformer 8 shown in Fig. 8 and is a continuous current of small amplitude as compared with the current in the first to eighth embodiments, the conduction loss can be decreased.

### (Embodiment 4)

A fourth embodiment of the invention is described below. Fig. 7 is a circuit constitutional diagram showing the tenth embodiment of the invention. In Fig. 7, what differs from the constitution in Fig. 3 is that the first and second diodes 61, 62 are replaced by first and second capacitors 71, 72. The number of turns of the primary winding 81 is supposed to be N1 and the number of turns of the tertiary winding 83 to be N3, assuming N = N3/N1.

Thus, in the fourth embodiment, when N=1, its operation is equivalent to the third embodiment, and when N<1, the effect of the second embodiment on the first embodiment is similar on the third embodiment.

### (Embodiment 5)

A fifth embodiment of the invention is described below. Fig. 8 is a circuit constitutional diagram showing the fifth embodiment of the invention. In Fig. 8, what differs from the constitution in Fig. 1 is that a parallel circuit of capacitor 73 and choke coil 53 is connected between the cathode terminals of the first and second diodes 61, 62, and the primary winding 81 and switch element 9.

Thus constituted switching power source apparatus operates nearly same as in the third embodiment. First, while the polarity of the input alternating-current power source 1 is in the period in Fig. 8, when the switch element 9 is turned on, the current flows and increases in the route of input alternating-current power source 1 → diode 61 → capacitor 73 → switch element 9 → choke coil 5 → diode 33 → input alternating-current power source 1. At the same time, the choke coil 53 connected parallel to the capacitor 73 is excited. When the switch element 9 is turned off, the current flows in the route of input alternating-current power source 1 → diode 31 → smoothing capacitor → choke coil 5 → diode 33 → input alternating-current power source 1, and at the same time the excitation current of the choke coil 53 flows in the direction of discharging the electric charge accumulated in the capacitor 73.

When the polarity of the input alternating-current power source 1 is inverted from the state in Fig. 8, the diode 62 operates instead of the diode 61, the diode 32, instead of the diode 31, and the diode 34, instead of the diode 33. That is, the role of the first and second capacitors 71, 72 in the third embodiment is played by the capacitor 73, and when the switch element 9 is turned off, the role of the primary winding 81 for discharging the electric charge of the first and second capacitors 71, 72 is played by the choke coil 53.

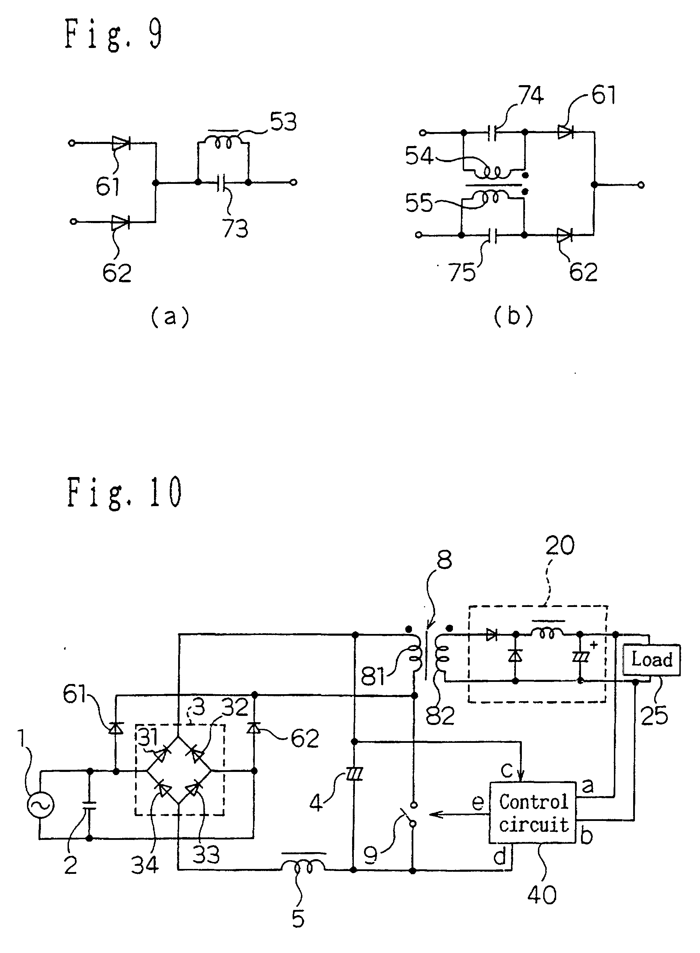

The fifth embodiment is constituted by disposing a parallel circuit of capacitor 73 and choke coil 53 in series to the first and second diodes 61, 62 as in the first: embodiment as shown in Fig. 9 (a). Similarly, as shown in Fig. 9 (b), by installing a parallel circuit of capacitor 74 and choke coil 54 in series to the first diode 61, and a parallel circuit of capacitor 75 and choke coil 55 in series to the second diode 62, too, a switching power source apparatus operating same as in the fifth embodiment is obtained. These constitutions can operate same on the second to fourth embodiments.

### (Embodiment 6)

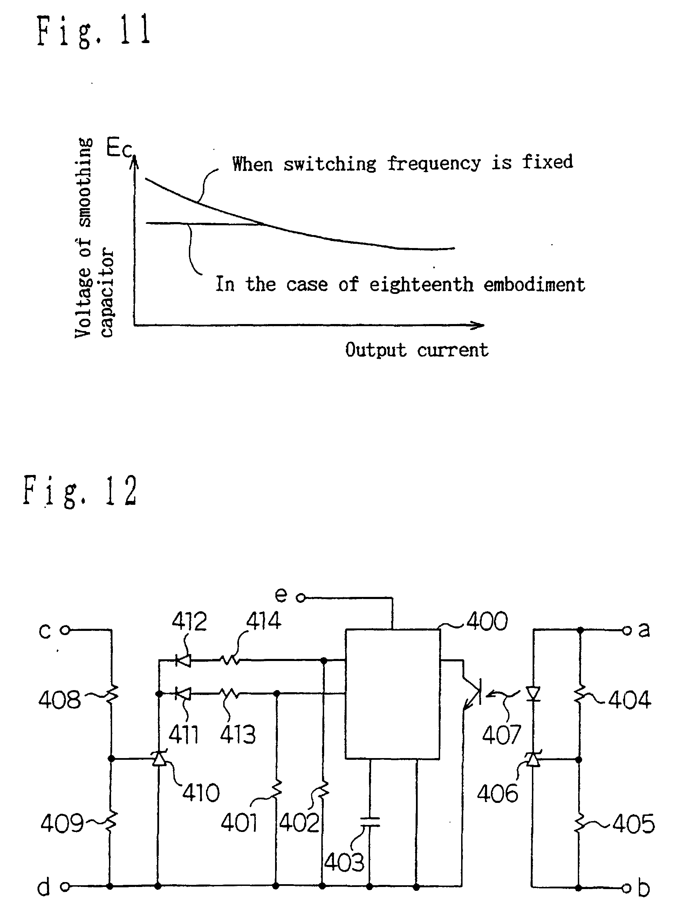

A sixth embodiment of the invention is described below. Fig. 10 is a circuit constitutional diagram showing the sixth embodiment of the invention. In Fig. 10, what differs from the constitution in Fig. 1 is the function of the control circuit 40, that is, the switching frequency is controlled depending on the voltage of the smoothing capacitor 4. It is same as in the prior art and the foregoing embodiments that the on/off ratio of the switch element 9 is controlled so as to stabilize the output direct-current voltage.

Thus constituted switching power source apparatus operates nearly same as in the first embodiment. The input/output voltage ratio of the DC/DC converter represented by the feed-forward converter used in the embodiment of the invention is expressed by the on/off ratio of the switch element 9. Accordingly, when the switching frequency is fixed, the ON time and OFF time of the switch element 9 are hardly changed by the output current. If the output current becomes small, the energy per period of switching entered through the choke coil 5 or first and second choke coils 51, 52 is hardly changed. Therefore, when the output current becomes small, the voltage of the smoothing capacitor 4 elevated as shown by characteristic A in Fig. 24 so as to keep balance of the input and output power, and hence the switch element 9 and smoothing capacitor 4 come to have higher withstand voltage. By contrast, in the sixth embodiment, the control circuit 40 has the function of detecting the voltage of the smoothing capacitor 4 so as to raise the switching frequency when it is raised. When the output current becomes small and the voltage of the smoothing capacitor 4 rises, the switching frequency is also raised, and hence the energy per period of switching entered through the choke coil 5 or first and second choke coils 51, 52 decreases. Therefore, as indicated by characteristic B in Fig. 11, the elevation of the voltage of the smoothing capacitor 5 can be controlled.

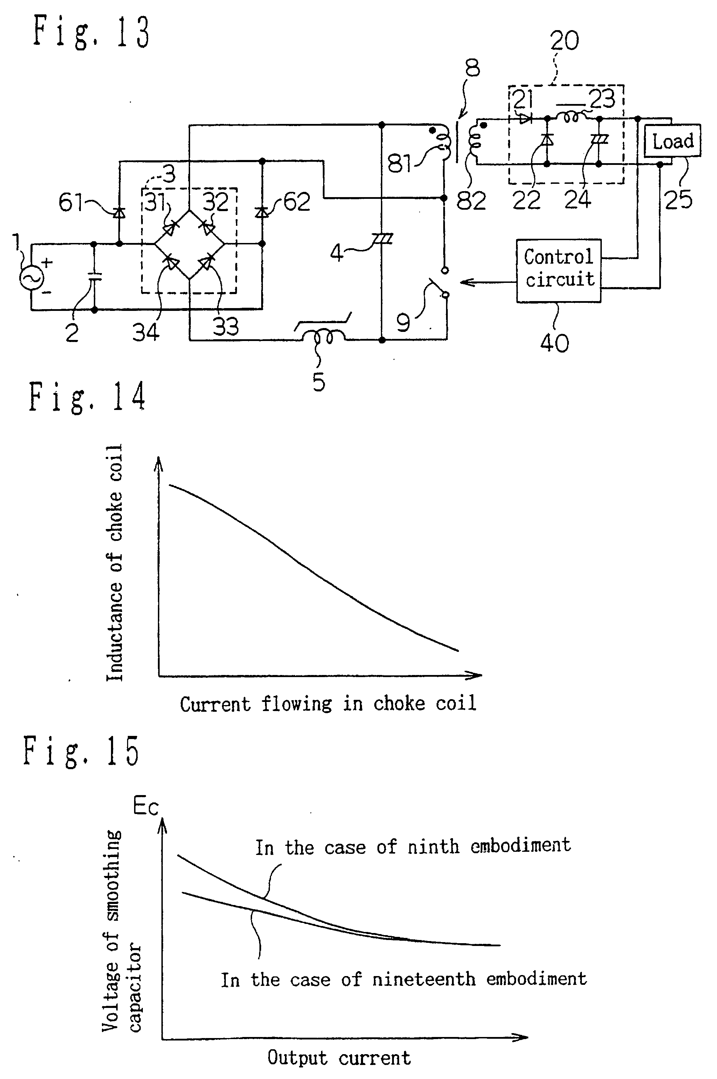

Fig. 12 is a circuit diagram showing a practical example of the control circuit 40. The terminal reference numerals correspond to those of the control circuit 40 in Fig. 10. The area enclosed by broken line in the diagram is the portion having the function explained in this embodiment. In Fig. 12, reference numeral 400 is a control IC, and M51977 is used herein. Reference numerals 401, 402 are resistances, and 403 is a capacitor, and 401 and 402 determine the charging and discharging current of the capacitor 403, and the charging and discharging time is the maximum ON time and minimum OFF time, and their sum is the switching period. Reference numerals 404, 405 are resistance, 406 is a shunt regulator, and 407 is a photo coupler, and the output direct-current voltage is detected and fed back to the control IC 400. The control IC 400 determines the ON time so as to stabilize the output DC voltage, and a drive pulse to the switch element 9 is issued. The time subtracting the ON time from the switching period is the OFF time. Reference numerals 408, 409 are resistance, 410 is a shunt regulator, 411, 412 are diodes, and 413, 414 are resistances, and the voltage of the smoothing capacitor 4 detected by the resistors 408, 409 is fed into the shunt regulator 410, and when the voltage of the smoothing capacitor 4 rises over a specified voltage, a current flows through the diode 411, resistance 413, diode 412 and resistance 414, and the charging and discharging current of the capacitor 403 is increased. That is, the switching frequency climbs up. If the switching frequency changes, in order to stabilize the output direct-current voltage, the control IC 400 determines the ON time within the changed maximum ON time.

In this way, in the sixth embodiment, since the elevation of voltage of the smoothing capacitor 4 can be suppressed, a low withstand voltage type can be used for both switch element 9 and smoothing capacitor 4.

Incidentally, in the sixth embodiment, the voltage of the smoothing capacitor 4 is detected by resistance division, but other voltage corresponding to the voltage of the smoothing capacitor 4 may be detected, for example, the winding voltage of the transformer 8 generated when the switch element 9 is ON may be detected.

The control circuit 40 shown in this embodiment is applied in the first embodiment, but it may be applied to any one of the second to fifth embodiments.

### (Embodiment 7)

A seventh embodiment of the invention is described below. Fig. 13 is a circuit constitutional diagram showing the seventh embodiment of the invention. In Fig. 13, what differs from the constitution in Fig. 5 is that the choke coil 5 has the performance of decreasing the inductance when the current increases as shown in Fig. 14.

Thus constituted switching power source apparatus operates nearly same as in the third embodiment. In the third embodiment, however, as the output current becomes smaller, the voltage of the smoothing capacitor 4 climbs up. In the case of the third embodiment, the current flowing in the choke coil 5 while the switch element 9 is ON is the resonance current of the choke coil 5 and first and second capacitors 71, 72, and it does not increase linearly as in the first embodiment. Therefore, when the output current is large, if the inductance value of the choke coil 5 is small, it hardly affects the operation of the switching power source apparatus. By contrast, in the seventh embodiment, since the choke coil 5 has the performance of decreasing the inductance value when the current becomes larger, it operates the same as in the third embodiment when the output current is large, and when the output current is small, the elevation of the voltage of the smoothing capacitor 4 is suppressed more than in-the third embodiment. Characteristic A in Fig. 15 denotes the ascending characteristic of the voltage of the smoothing capacitor 4 in the third embodiment, and characteristic B shows the ascending characteristic of the smoothing capacitor 4 in the fifth embodiment. As the choke coil 5 having such performance, regardless of the magnetic saturation, the number of turns of the winding should be smaller and the magnetic core gap should be narrower. That is, the choke coil 5 can be reduced in size.

By combining the seventh embodiment and sixth embodiment, and changing width of the switching frequency is smaller, and hence it is more effective.

In Fig. 18 showing a prior invention example, a series circuit of diode 10 and quaternary winding 84 is provided at both ends of the smoothing capacitor 4, and the magnetic reset of the transformer 4 can be done efficiently. However, the effect of the presence or absence of the series circuit of the diode 10 and quaternary winding 84 on the operation of the invention is not relatively large on the effect of the invention, and it not indispensable for explanation of the invention, and hence it was omitted in the foregoing embodiments.

In the embodiments, the circuit constitution on the basis of feed-forward converter has been described, but similar effects will be obtained by other DC/DC converters.

## Claims

1. A switching power source apparatus comprising:
a full-wave rectifying circuit (3) for rectifying an input alternating-current power source (1),
a transformer (8) possessing a primary winding (81) having one end connected to a positive electrode output terminal of the full-wave rectifying circuit (3), and a secondary winding (82),
a switch element (9) connected to the other end of the primary winding,
a smoothing capacitor (4) connected parallel to a series circuit of the primary winding (81), and switch element (9),
first and second diodes (61, 62) having anode terminals connected to a pair of input terminals of the full-wave rectifying circuit (3), and cathode terminals connected to the connection point of the primary winding (81) and switch element (9),
a choke coil (5) connected between the connection point of the switch element (9) and the smoothing capacitor (4), and the negative electrode output terminal of the full-wave rectifying circuit (3),
a rectifying and smoothing circuit (20) for rectifying and smoothing the output of the secondary winding (82), and supplying a direct-current output voltage to a load (25), and
a control circuit (40) for controlling the on/off ratio of the switch element (9) so that the direct-current output voltage may be stabilized.

2. A switching power source apparatus of claim 1, wherein
the transformer (8) further comprises a tertiary winding (83) having one end connected to either terminal of the primary winding (81), and
the cathode terminals of the first and second diodes (61, 62) are connected to the other end of the tertiary winding (83).

3. A switching power source apparatus comprising:
a full-wave rectifying circuit (3) for rectifying an input alternating-current power source (1),
a transformer (8) possessing a primary winding (81) having one end connected to a positive electrode output terminal of the full-wave rectifying circuit (3), and a secondary winding (82),
a switch element (9) connected to the other end of the primary winding (81),
a smoothing capacitor (4) connected parallel to a series circuit of the primary winding (81) and switch element (9),
first and second capacitors (71, 72) having one end of each connected to a pair of input terminals of the full-wave rectifying circuit (3), and the other ends connected to the connection point of the primary winding (81) and switch element (9),
a choke coil (5) connected between the connection point of the switch element (9) and the smoothing capacitor (4), and the negative electrode output terminal of the full-wave rectifying circuit (3),
a rectifying and smoothing circuit (20) for rectifying and smoothing the output of the secondary winding (82), and supplying a direct-current output voltage to a load (25), and
a control circuit (40) for controlling the on/off ratio of the switch element (9) so that the direct-current output voltage may be stabilized.

4. A switching power source apparatus of claim 3, wherein
the transformer (8) further comprises a tertiary winding (83) having one end connected to either terminal of the primary winding (81), and
the connection point of the first and second capacitors (71,72) is connected to the other end of the tertiary winding (83).

5. A switching power source apparatus of any one of claims 1 and 2, wherein
a parallel circuit of third choke coil (53) and capacitor (73) is connected in series to the first and second diodes (61,62).

6. A switching power source apparatus of any one of claims 1 to 5, wherein
the control circuit (40), detects the voltage of the smoothing capacitor (4) or a voltage corresponding to the voltage of the smoothing capacitor (4), and functions to vary the switching frequency of the switch element (9) so as to stabilize the detected voltage.

7. A switching power source apparatus of any one of claims 1 to 6, wherein
the choke coil (5) or the first and second choke coils (5, 53) have such characteristic that the inductance becomes smaller as the flowing current increases.

## Patentansprüche

1. Schalt-Stromversorgungsgerät, das umfasst:
eine Vollweg-Gleichrichtungsschaltung (3), die eine Eingangs-Wechselstromquelle (1) gleichrichtet,
einen Transformator (8), der eine Primärwicklung (81), deren eines Ende mit einem positiven Elektrodenausgangsanschluss der Vollweg-Gleichrichtungsschaltung (3) verbunden ist, und eine Sekundärwicklung (82) besitzt,
ein Schaltelement (9), das mit dem anderen Ende der Primärwicklung verbunden ist,
einen Glättungskondensator (4), der mit einem Serienkreis aus der Primärwicklung (81) und dem Schaltelement (9) parallel geschaltet ist,
eine erste und zweite Diode (61, 62) mit Anodenanschlüssen, die mit einem Paar von Eingangsanschlüssen der Vollweg-Gleichrichtungsschaltung (3) verbunden sind, und Kathodenanschlüssen, die mit dem Verbindungspunkt der Primärwicklung (81) und dem Schaltelement (9) verbunden sind,
eine Drosselspule (5), die zwischen den Verbindungspunkt des Schaltelements (9) und dem Glättungskondensator (4) und den negativen Elektrodenausgangsanschluss der Vollweg-Gleichrichtungsschaltung (3) geschaltet ist,
eine Gleichrichtungs- und Glättungsschaltung (20), die den Ausgang der Sekundärwicklung (82) gleichrichtet und glättet und eine Gleichstrom-Ausgangsspannung an eine Last (25) liefert, und
eine Steuerschaltung (40), die das Ein/Aus-Verhältnis des Schaltelements (9) so steuert, dass die Gleichstrom-Ausgangsspannung stabilisiert werden kann.

2. Schalt-Stromversorgungsgerät nach Anspruch 1, wobei
der Transformator (8) des Weiteren eine Tertiärwicklung (83) umfasst, deren eines Ende mit einem Ende der Primärwicklung (81) verbunden ist, und
die Kathodenanschlüsse der ersten und zweiten Diode (61, 62) mit dem anderen Ende der Tertiärwicklung (83) verbunden sind.

3. Schaltstromversorgungsgerät, das umfasst:
eine Vollweg-Gleichrichtungsschaltung (3), die eine Eingangs-Wechselstromquelle (1) gleichrichtet,
einen Transformator (8), der eine Primärwicklung (81), deren eines Ende mit einem positiven Elektrodenausgangsanschluss der Vollweg-Gleichrichtungsschaltung (3) verbunden ist, und eine Sekundärwicklung (82) besitzt,
ein Schaltelement (9), das mit dem anderen Ende der Primärwicklung (81) verbunden ist,
einen Glättungskondensator (4), der mit einem Serienkreis aus der Primärwicklung (81) und dem Schaltelement (9) parallel geschaltet ist,
einen ersten und zweiten Kondensator (71, 72), von denen je ein Ende mit einem Paar von Eingangsanschlüssen der Vollweg-Gleichrichtungsschaltung (3) verbunden ist, und die anderen Enden mit dem Verbindungspunkt der Primärwicklung (81) und dem Schaltelement (9) verbunden sind,
eine Drosselspule (5), die zwischen den Verbindungspunkt des Schaltelements (9) und dem Glättungskondensator (4) und den negativen Elektrodenausgangsanschluss der Vollweg-Gleichrichtungsschaltung (3) geschaltet ist,
eine Gleichrichtungs- und Glättungsschaltung (20), die den Ausgang der Sekundärwicklung (82) gleichrichtet und glättet und eine Gleichstrom-Ausgangsspannung an eine Last (25) liefert, und
eine Steuerschaltung (40), die das Ein/Aus-Verhältnis des Schaltelements (9) so steuert, dass die Gleichstrom-Ausgangsspannung stabilisiert werden kann.

4. Schalt-Stromversorgungsgerät nach Anspruch 3, wobei
der Transformator (8) des Weiteren eine Tertiärwickiung (83) umfasst, deren eines Ende mit einem Ende der Primärwicklung (81) verbunden ist, und
der Verbindungspunkt des ersten und zweiten Kondensators (71, 72) mit dem anderen Ende der Tertiärwicklung (83) verbunden ist.

5. Schalt-Stromversorgungsgerät nach einem der Ansprüche 1 und 2, wobei
ein Parallelkreis aus einer dritten Drosselspule (53) und einem Kondensator (73) mit der ersten und zweiten Diode (61, 62) in Reihe geschaltet ist.

6. Schalt-Stromversorgungsgerät nach einem der Ansprüche 1 bis 5, wobei
die Steuerschaltung (40) die Spannung des Glättungskondensators (4) oder eine der Spannung des Glättungskondensators (4) entsprechende Spannung erfasst und die Schaltfrequenz des Schaltelements (9) verändert, um die erfasste Spannung zu stabilisieren.

7. Schalt-Stromversorgungsgerät nach einem der Ansprüche 1 bis 6, wobei
die Drosselspule (5) oder die erste und zweite Drosselspule (5, 53) Eigenschaften derart aufweisen, dass die Induktivität kleiner wird, wenn der fließende Strom zunimmt

## Revendications

1. Dispositif d'alimentation de puissance à découpage comprenant :
un circuit de redressement pleine onde (3) destiné à redresser une source d'énergie à courant alternatif (1) d'entrée,
un transformateur (8) possédant un enroulement primaire (81) ayant une extrémité connectée à une borne de sortie d'électrode positive du circuit de redressement pleine onde (3), et un enroulement secondaire (82),
un élément de commutation (9) connecté à l'autre extrémité de l'enroulement primaire,
un condensateur de lissage (4) connecté en parallèle avec un circuit série constitué par l'enroulement primaire (81) et l'élément de commutation (9),
une première et une deuxième diode (61, 62) ayant leurs bornes d'anode connectées à une paire de bornes d'entrée du circuit de redressement pleine onde (3), et leurs bornes de cathode connectées au point de connexion de l'enroulement primaire (81) et de l'élément de commutation (9),
une bobine d'arrêt (5) connectée entre le point de connexion de l'élément de commutation (9) et du condensateur de lissage (4) et la borne de sortie de l'électrode négative du circuit de redressement pleine onde (3),
un circuit de redressement et de lissage (20) destiné à redresser et à lisser la sortie de l'enroulement secondaire (82), et à délivrer une tension de sortie en courant continu à une charge (25), et
un circuit de commande (40) destiné à commander le rapport marche/arrêt de l'élément de commutation (9) de telle sorte sue la tension de sortie en courant continu puisse être stabilisée.

2. Dispositif d'alimentation de puissance à découpage selon la revendication 1, dans lequel
le transformateur (8) comprend en outre un enroulement tertiaire (83) ayant une extrémité connectée à l'une des bornes de l'enroulement primaire (81) et
les bornes de cathode de la première et de la deuxième diode (61, 62) sont connectées à l'autre extrémité de l'enroulement tertiaire (83).

3. Dispositif d'alimentation de puissance à découpage comprenant :
un circuit de redressement pleine onde (3) destiné à redresser une source d'énergie à courant alternatif (1) d'entrée,
un transformateur (8) possédant un enroulement primaire (81) ayant une extrémité connectée à une borne de sortie d'électrode positive du circuit de redressement pleine onde (3), et un enroulement secondaire (82),
un élément de commutation (9) connecté à l'autre extrémité de l'enroulement primaire (81),
un condensateur de lissage (4) connecté en parallèle avec un circuit série constitué par l'enroulement primaire (81) et l'élément de commutation (9),
un premier et un deuxième condensateur (71, 72) ayant une extrémité de chacun connectée à une paire de bornes d'entrée du circuit de redressement pleine onde (3) et les autres extrémités connectées au point de connexion de l'enroulement primaire (81) et de l'élément de commutation (9),
une bobine d'arrêt (5) connectée entre le point de connexion de l'élément de commutation (9) et du condensateur de lissage (4) et la borne de sortie de l'électrode négative du circuit de redressement pleine onde (3),
un circuit de redressement et de lissage (20) destiné à redresser et à lisser la sortie de l'enroulement secondaire (82), et à délivrer une tension de sortie en courant continu à une charge (25), et
un circuit de commande (40) destiné à commander le rapport marche/arrêt de l'élément de commutation (9) de telle sorte que la tension de sortie en courant continu puisse être stabilisée.

4. Dispositif d'alimentation de puissance à découpage selon la revendication 3, dans lequel
le transformateur (8) comprend en outre un enroulement tertiaire (83) ayant une extrémité connectée à l'une des bornes de l'enroulement primaire (81) et
le point de connexion du premier et du deuxième condensateur (71, 72) est connecté à l'autre extrémité de l'enroulement tertiaire (83).

5. Dispositif d'alimentation de puissance à découpage selon l'une quelconque des revendications 1 et 2, dans lequel
un circuit parallèle constitué par une troisième bobine d'arrêt (53) et un condensateur (73) est connecté en série avec la première et la deuxième diode (61, 62).

6. Dispositif d'alimentation de puissance à découpage selon l'une quelconque des revendications 1 à 5, dans lequel
le circuit de commande (40) détecte la tension du condensateur de lissage (4) ou une tension correspondant à la tension du condensateur de lissage (4) et fonctionne de manière à faire varier la fréquence de commutation de l'élément de commutation (9) de façon à stabiliser la tension détectée.

7. Dispositif d'alimentation de puissance à découpage selon l'une quelconque des revendications 1 à 6, dans lequel
la bobine d'arrêt (5) ou la première et la deuxième bobine d'arrêt (5, 53) ont des caractéristiques telles que l'inductance devient plus faible quand le courant qui s'écoule augmente.
